# EUROPEAN PATENT APPLICATION

(11) **EP 2 779 071 A1**
(43) Date of publication of application: **17.09.2014**
(21) Application number: 14158721.2
(22) Date of filing: 11.03.2014
(51) Int. Cl.: G06Q 30/00

(54) **Mobile display device with flip-screen functionality**

(30) Priority: 15.03.2013 US 201313844401
(71) Applicant: Yume, Inc., Redwood City, CA 94063 (US)
(72) Inventor: Doser, Andrew, Santa Clara, CA 95051 (US)
(74) Representative: TBK

(57) **Abstract**

A method includes displaying a front slate advertisement on a screen of a mobile display device. If a flip-screen command is detected, an animation is displayed on the screen which "flips" the front slate advertisement to the back slate advertisement. Optionally, a flip-screen command detected while in the back slate advertisement will cause an animation to be displayed on the screen which "flips" the back slate advertisement back to the front slate advertisement.

## Description

### BACKGROUND

Electronic commerce, often known as "e-commerce", includes advertising as well as the buying and selling of products or services over electronic systems such as the Internet. The amount of trade conducted electronically has grown immensely with the widespread adoption of Internet technology. One particularly explosive area of growth in e-commerce is in the field of advertising and, in particular, video advertising on the Internet.

Video advertising over the Internet is supported by many hardware platforms, sometimes referred to herein as "client" or "user" devices. For example, video advertising can be displayed in web browsers of computers. Video advertising is also increasingly being implemented on mobile devices such as smartphones and tablet computers. With such advertising, the video advertisement is typically "streamed" from a server to the client device over a network such as the Internet, a wireless telephone network, a private network, etc.

A popular form of video advertisement is referred to as an "in-stream ad." With this technology, a short video advertisement (*e.g.* 15-30 seconds long) is play before ("pre-roll"), during ("mid-roll") or after ("post-roll") streaming video content that a client has requested. Since in-stream ads are frequently used to monetize the video content the publisher is delivering they usually must be played until completion. This is particularly true with pre-roll in-stream ads. As a result, they are not interactive media and the brand interaction of such ads is limited. Furthermore, the pre-roll advertisement can sometimes have the negative effect of brand degradation if users are forced to passively view an entire advertisement before being able to view their requested video content. Still further, with mobile video ad units growing in popularity, advertisers are seeking new and creative ways to engage and interact with their target audience.

These and other limitations of the prior art will become apparent to those of skill in the art upon a reading of the following descriptions and a study of the several figures of the drawing.

### SUMMARY

A method, set forth by way of example and not limitation, includes displaying a front slate advertisement on a screen of a mobile display device. If a flip-screen command is detected, an animation is displayed on the screen which "flips" the front slate advertisement to the back slate advertisement. Optionally, a flip-screen command detected while in the back slate advertisement will cause an animation to be displayed on the screen which "flips" the back slate advertisement back to the front slate advertisement.

A mobile display device, set forth by way of example and not limitation, includes a processor, a screen, and a memory. In an embodiment, the memory includes code segments for displaying a front slate advertisement on the screen of the display, for detecting a flip-screen command, for animating a "flip" of the front slate advertisement on the screen, and for displaying a back slate advertisement on the screen after the "flip."

Non-transitory computer readable media containing program instructions executable on a processor, set forth by way of example and not limitation, include: code segments displaying a front slate advertisement on a screen of a display; code segments detecting a flip-screen command; code segments animating a flip of the front slate advertisement on the screen; and code segments displaying a back slate advertisement on the screen.

Methods, apparatus and articles of manufacture disclosed herein provide the opportunity for additional, user initiated, brand interaction on the back slate. The engaging "flip" action encourages further user engagement with the brand and benefits advertisers by being able to further educate their audience about their product or service and to drive interactions.

These and other embodiments, features and advantages will become apparent to those of skill in the art upon a reading of the following descriptions and a study of the several figures of the drawing.

### BRIEF DESCRIPTION OF THE DRAWINGS

Several example embodiments will now be described with reference to the drawings, wherein like components are provided with like reference numerals. The example embodiments are intended to illustrate, but not to limit, the invention. The drawings include the following figures:
Figure 1 is a block diagram of an example system which can be used in some implementations of one or more features described herein;
Figure 2 is a block diagram illustrating an example mobile display device suitable for use with features described herein;
Figures 3A-3D illustrate an example "flip" process on a mobile display device;
Figure 4 is a flow diagram illustrating a process, set forth by way of example but not limitation, of implementing the flip process of Figs. 3A-3D; and
Figure 5 is a table providing several examples of "flip" processes.

### DETAILED DESCRIPTION OF EXAMPLE EMBODIMENTS

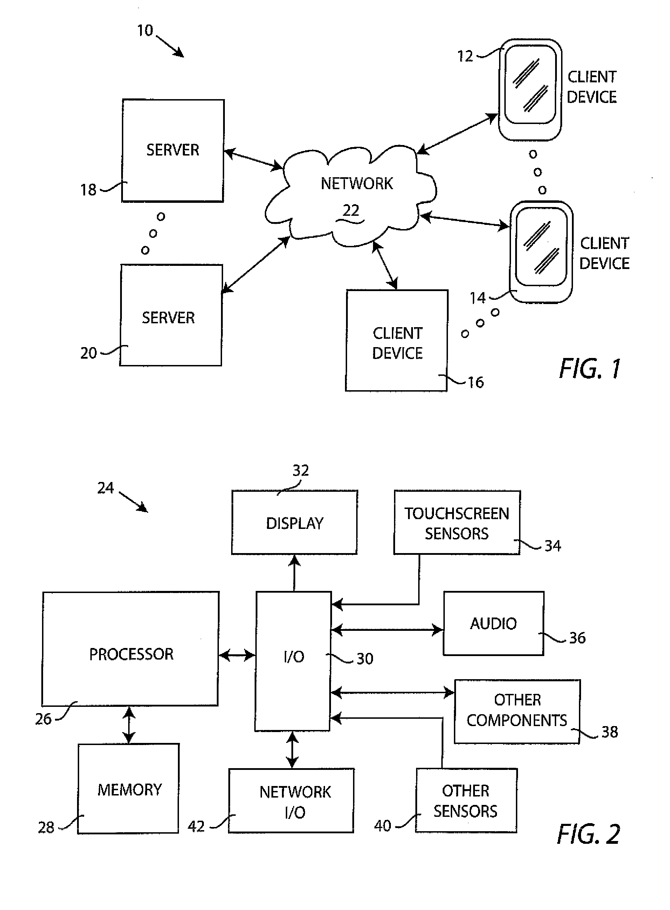

Figure 1 is a block diagram of an example system 10 which can be used in some implementations of one or more features described herein. In this example, the system 10 includes one or more user client devices such as a smartphone 12, a tablet computer 14 and a computer 16, one or more video servers such as an ad server 18 and a video content server 20, and a network 22. As used herein, the words "client" and "user" may be used synonymously.

User client devices can be any devices that are operated by users and connected to network 22 by a communication link, such as a wireless or wired link. A client device can perform a variety of functions, including performing communications with other devices and running applications on the device that receive input from the user and provides output to the user. In some examples, the user input can be in various forms including contacting a touchscreen on the device, manipulating an input pointing device (*e*.*g*., mouse, trackball, touchpad, joystick, etc.), pressing physical keys or physical buttons (keyboard, buttons, etc.), providing voice or sound input to a microphone, causing motion of the device, etc. Any of a variety of devices can be used as user devices in addition to the non-limiting examples of smartphone 12, tablet computer 14 and computer 16 including, but not limited to, personal digital assistants (PDAs), game devices, televisions, telephones, media players, home appliances and devices, etc.

Video servers, such as ad server 18 and video content server 20, provide streaming video to client devices over network 22, in this non-limiting example. An ad server 18 can be provided by an advertiser or an ad network, and a video content server 20 can be provided by a number of sources including YouTube® of Mountain View, California. An ad server 18 can, for example, provide "pre-roll" in-stream ad which precedes video from video content server 20. Such pre-roll in-stream ad often takes the form of a 15-30 second video advertisement for a product or service. In other examples, more or fewer servers may be used to provide content and video advertising.

One or more networks 22 are used to provide communication channels for the various devices of system 10. Network 22 can be any type of communication network or combinations of communication networks, including the Internet, local area networks (LANs), telephone networks, and/or other networks. Some implementations can provide features described herein on devices that are intermittently connected to network 22. A number of network communication protocols are suitable for the communication between the client devices and the servers of the system 10.

Fig. 2 is a block diagram illustrating an example client device 24 suitable for use with features described herein. For example, client device 24 can be used to illustrate mobile display devices such as smartphone 12 and tablet computer 14. In some implementations, a server system such as ad server 18 or advertiser server 20 can include some or all of the components shown for the example client device 24.

A processor 26 can be included in client device 24 to control operation of the device. The processor 26 can be one or more of any type of processors or processing circuitry, such as microprocessors, ASICs, FPGAs, logic gates, etc. The processor 26 can access memory 28 which can store a variety of program instructions and data for use and output by processor 26, including applications, operating system data, data received from other devices over a network, etc. In some implementations, memory 28 can be embedded in processor 26, and/or can be provided separately in the client device 24. Any of a variety of different types of memory can be used, such as RAM, ROM, Flash memory, EEPROM, etc. Some memory 28 can be "volatile" (*e*.*g*. its memory state is lost when power is removed) while other memory 28 can be "nonvolatile" (*e*.*g*. its memory state is retained when power is removed). All forms of memory 28 are considered to be "non-transitory", as set forth in a memorandum entitled "Subject Matter Eligibility of Computer Readable Media" by David J. Kappos, Under Secretary of Commerce for Intellectual Property and Director of the United States Patent and Trademark Office dated January 26, 2010, in that the memory 28 does not store data in a transitory propagating signal.

I/O circuitry 30 can be coupled to the processor 26 to interface the processor with a variety of different input components and output components for use with the client device 24. For example, a display 32 such as a display screen or other display device can output visual images, text, etc. produced by processor 26 and/or other components 38 of the client device 24. Touchscreen sensors 34 can be included on some types of device 24 to allow contact on or over the display screen 32 by a user or object to be sensed and the position of the contact relayed to processor 26. Audio devices 36 can be included, such as one or more speakers used to output sounds and music, and one or more microphones to receive voice input and other audio and relay the audio input to the processor 26.

Other various types of sensors 40 can be connected in device 24 and used to sense different characteristics, such as accelerometers and/or gyroscopes to sense motion of the client device 24 (*e.g.,* shaking, tilting, rotation, or other movement in space), optical sensors to sense contact of the user on client device 24 or other objects in relation to the client device 24, magnetic sensors, or other types of sensors. Network I/O 42 can include one or more components for enabling communication of information between the client device 24 and other devices over a network. For example, wireless communication components can use radio frequency (RF), infrared (IR), or other wireless frequencies to communicate information in signals to and from wireless networks. Standard protocols such as cell phone protocols and/or WiFi can be used in some implementations. Other input and output components can also be included or connected to client device 24, such as components allowing various devices or networks to be connected via a wired connection to the client device 24, including Ethernet or other network components.

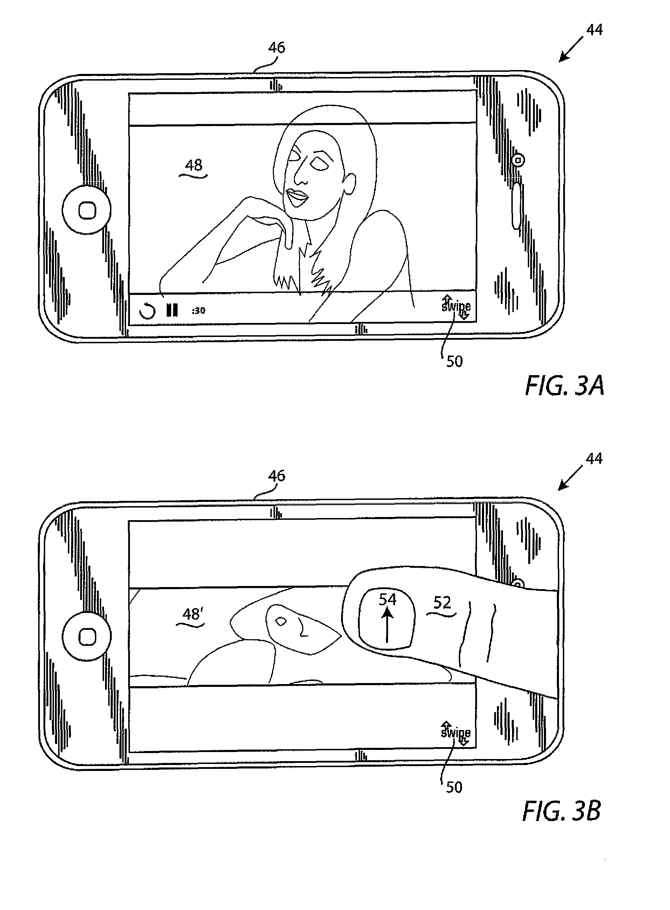

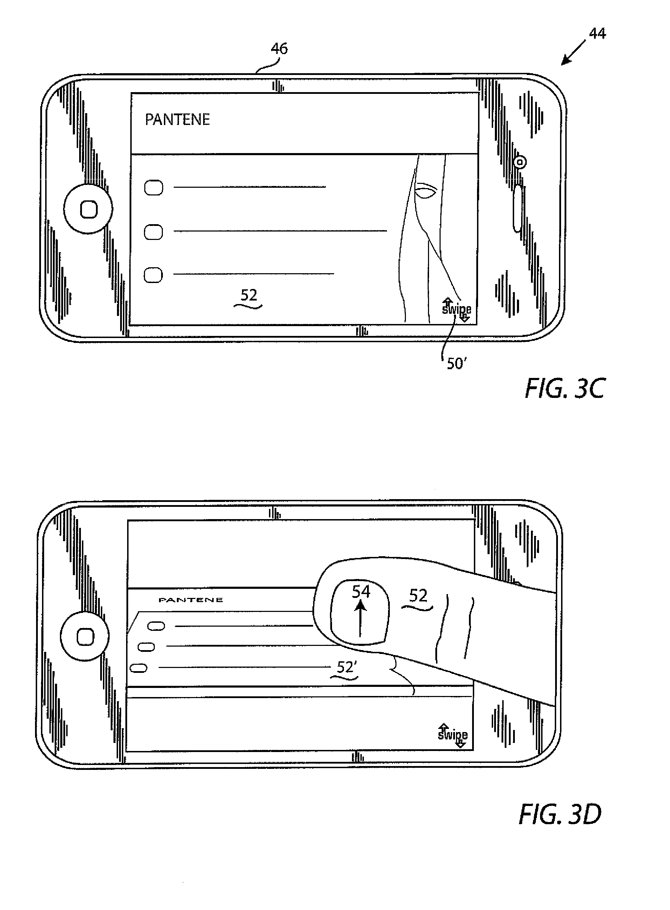

Fig. 3A illustrates a mobile display device 44 which, in this non-limiting example, is an iPhone® made by Apple, Inc. of Cupertino, California. The mobile display device 44 includes a screen 46 which is, in this non-limiting example, displaying a front slate advertisement 48. Also seen on the screen is an icon 50 reading "swipe." In Fig. 3B, a user's thumb 52 creates a "swipe" gesture by swiping his thumb along screen 46 in the direction 54. As can be seen, this causes a "flip" of the front slate advertisement 48', which appears to rotate around a central, horizontal axis in this non-limiting example. In Fig. 3C, the "flip" has been completed a back slate 52 is displayed on the screen 46. The back slate also includes a flip icon 50'. In Fig. 3D, the user's thumb creates a "swipe" gesture by swiping his thumb along screen 46 in the direction 54. This causes a "flip" of the back slate 52', which appears to rotate around a central, horizontal axis in this non-limiting example. The resulting impression of the "flip" animation to make it appear that the front slate and the rear slate are front and back sides of a display and that the display can be flipped to show one side or the other.

It should be noted that the "swipe" gesture described above is just one example of a "flip-screen" command. Many other forms of input are possible, including audio, tactile, haptic, electromagnetic, optical, etc. inputs. Table 1 illustrates three of the many possible flip-screen command types.

**TABLE 1 - FLIP-SCREEN COMMANDS**

| **Flip Action** | **Description** |
|---|---|
| Tap | User taps on icon/button element to flip from Slate Front to Slate Back |
| Swipe | User is prompted to swipe the screen to flip from Slate Front to Slate Back by an animated icon/button element |
| Shake | User is prompted to shake the device to flip from Slate Front to Slate Back by an animated icon/button element |

For example, touchscreen sensors can be used to detect tap and swipe gestures. Other sensors, such as accelerometer sensors, can be used to detect a shake gesture, by way of non-limiting examples.

The functionality for gesture detection is built-in to most modern cell phones or "smartphones." For example, the Android® operating system from Google, Inc. of Mountain View, California uses the class GestureDetector.OnGestureListener to inform of a gesture. For example, the following can detect a swipe gesture under the Android operating system:
@Override
public boolean onFling(MotionEvent e1, MotionEvent e2, float velocityX, float velocityY) { // Swipe Detected and handle swipe event
}

A swipe gesture can be detected on mobile display devices having the iOS operating system from Apple, Inc. of Cupertino, California using UISwipeGestureRecognizer which is a concrete subclass of UICestureRecognizer that looks for swiping gestures in one or more directions. In the iOS operating system, a swipe is a discrete gesture, and thus the associated action message is sent only once per gesture.

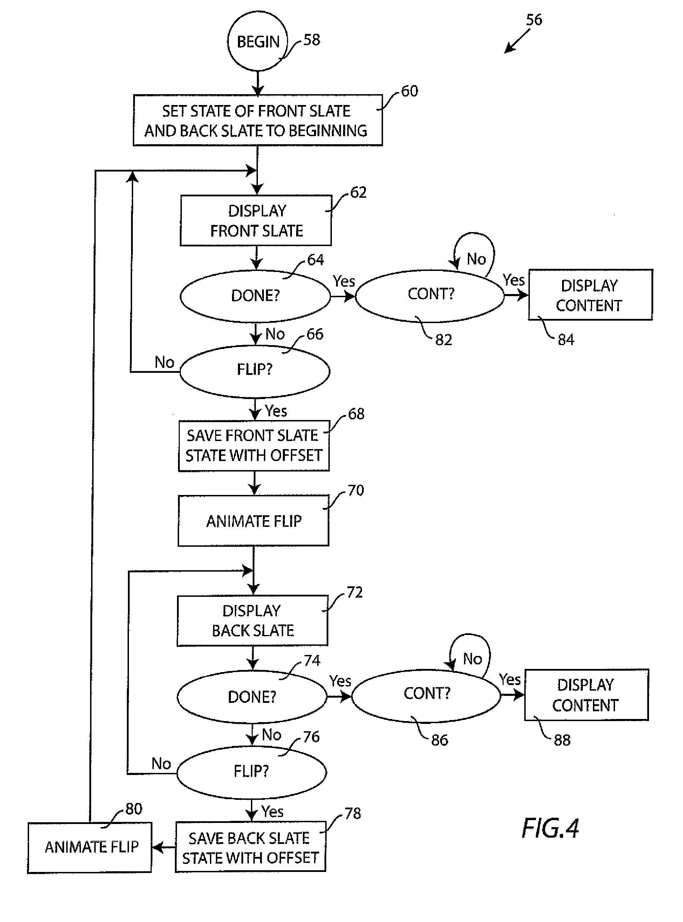

Fig. 4 is a flow diagram of a process 56, set forth by way of example and not limitation, for "flipping" between a front slate and a back slate. Process 56 begins at 58 and, in an operation 60, the initial states of the front slate and the back slates are set to their beginning values. For example, if the front slate is a video advertisement ("ad"), its state is set to the beginning of the video advertisement.

Next, in an operation 62, the front slate is displayed. Again, in the example of a video advertisement, this means that the ad can start playing. If the front slate is an image, that image is displayed. Next, in an operation 64, it is determined if the content of the front slate is finished. For example, if the front slate is a video advertisement, it is determined if the video advertisement was done. If not, an operation 66 determines if a split-screen command has been detected. If not, process control is returned to operation 62.

If operation 66 has detected a flip-screen command, an operation 68 saves the state of the front slate with an offset. For example, if 13 seconds of a video advertisement of the front slate had been played at the time that a flip-screen command was detected, it may offset by -3 seconds to assign a state of 10 seconds as the place to restart the video advertisement. In some example embodiments, the offset can be zero (*e.g.* no offset) or positive (*e*.*g*. jump forward in the video advertisement).

Next, the "flip" is animated in an operation 70. As will be discussed subsequently, the "flip" animation functionality is provided in the iOS and Android operating systems. Then, in an operation 72, the back slate is displayed. If, in an operation 76, it is determined that the back slate is not done (*e*.*g*., if the back slate is a video advertisement, it has not yet been completed), then an operation 76 detects whether a "flip" command has been detected. If not, process control is returned to operation 72.

If, however, operation 76 determines that a flip command has been detected, an operation saves a back slate "state" with offset. Again, the offset can be positive, negative, or zero and indicates the state at which the back slate advertisement should resume, if applicable. Then, a "flip" is animated by operation 80 and process control returns to operation 62.

If operation 64 determines that the front slate advertisement is done, an operation 82 asks the user if he or she would like to continue. If so, content is displayed in operation 84. Likewise, if operation 74 determines that the rear slate advertisement is done, an operation 86 asks the user if he or she would like to continue. If so, content is displayed in an operation 88.

As noted previously, the animation functionality is built-in to many smartphones and can be evoked by the program commands. A pseudocode listing of an example process for providing flip screen functionality is as follows:

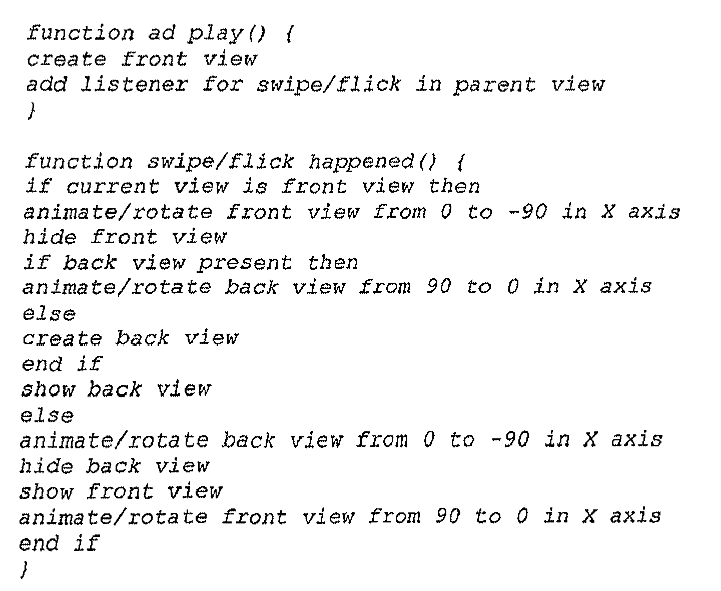

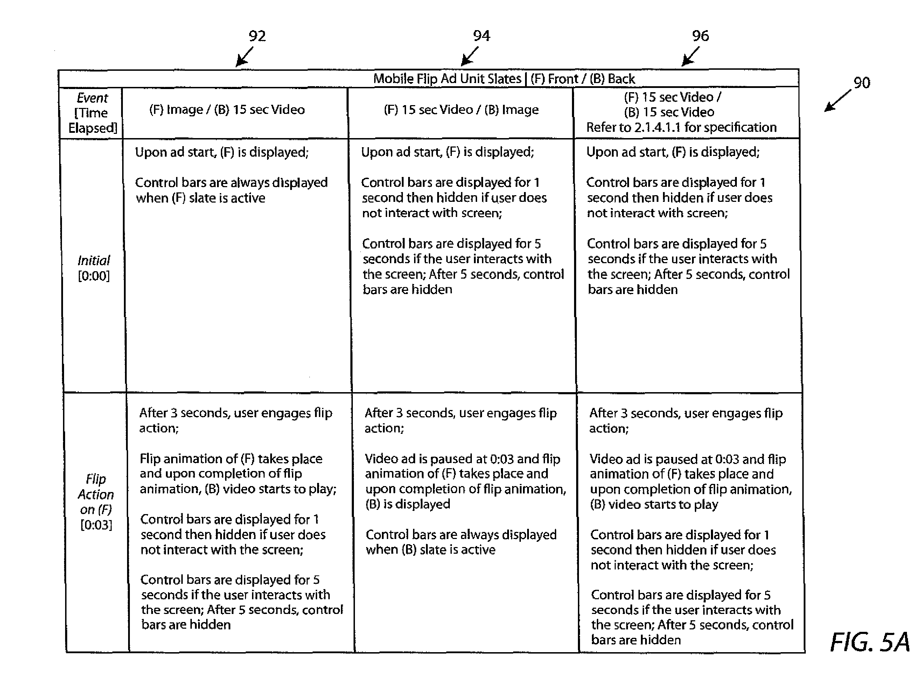

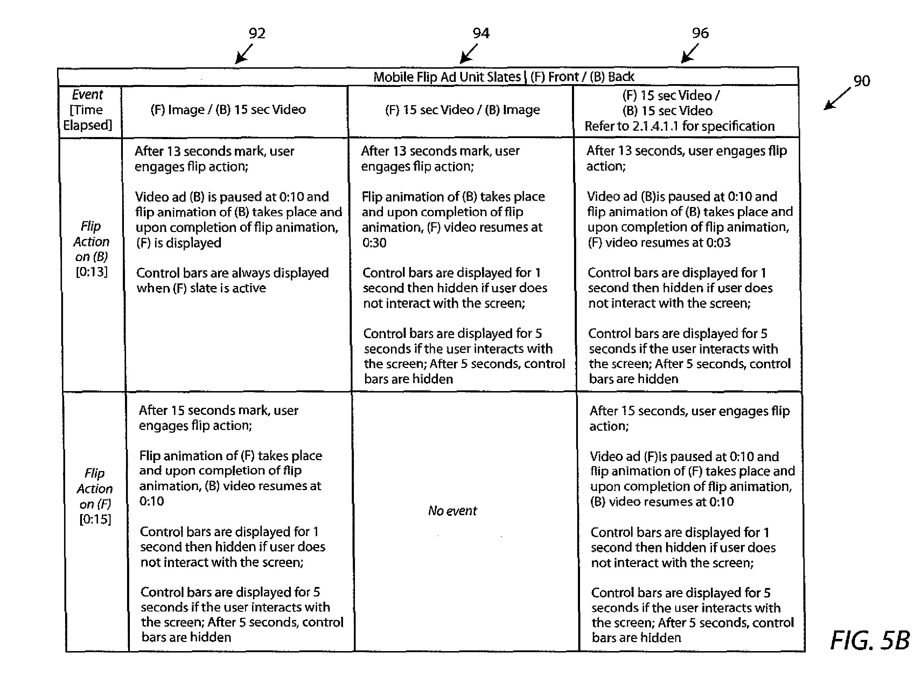

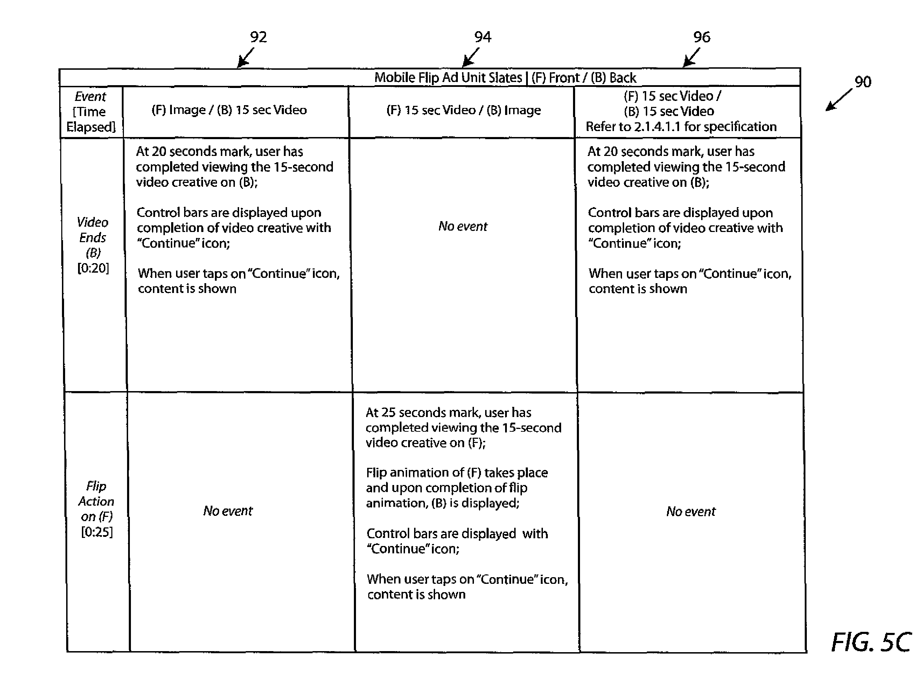

Fig. 5 is a table 90 illustrating several examples of "flip" processes. Again, these examples are set forth by way of example and not limitation, as many permutations and combinations are possible.

In this non-limiting example, the columns 92, 94 and 96 illustrate several example scenarios. In column 92, it is assumed that the front slate (F) is an image and the back slate (B) is a 15 second video. In column 92, it is assumed that the front slate (F) is a 15 second video and that back slate (B) is an image. In column 96, it is assumed that the front slate (F) is a 15 second video and that the back slate video (B) is also a 15 second video. It should be noted, in this non-limiting example, that at least one of the front slate and the back slate is a video.

The rows correspond to time (in seconds) in this example. The first row is the start of the process, row two is after three seconds, row three is after thirteen seconds, row four is after fifteen seconds, row five is after twenty seconds, and row six is after twenty-five seconds. The various states of the slates and actions that are taken for each of the three examples of columns 92, 94 and 96 are shown in non-limiting examples.

Although various embodiments have been described using specific terms and devices, such description is for illustrative purposes only. The words used are words of description rather than of limitation. It is to be understood that changes and variations may be made by those of ordinary skill in the art without departing from the spirit or the scope of various inventions supported by the written disclosure and the drawings. In addition, it should be understood that aspects of various other embodiments may be interchanged either in whole or in part. It is therefore intended that the claims be interpreted in accordance with the true spirit and scope of the invention without limitation or estoppel.

A method includes displaying a front slate advertisement on a screen of a mobile display device. If a flip-screen command is detected, an animation is displayed on the screen which "flips" the front slate advertisement to the back slate advertisement. Optionally, a flip-screen command detected while in the back slate advertisement will cause an animation to be displayed on the screen which "flips" the back slate advertisement back to the front slate advertisement.

## Claims

1. A method for displaying advertisements comprising:
displaying a front slate advertisement on a screen of a mobile display device;
detecting a flip-screen command with the mobile display device;
animating a flip of the front slate advertisement on the screen; and
displaying a back slate advertisement on the screen.

2. A method for displaying advertisements as recited in claim 1 wherein at least one of the front slate advertisement and the back slate advertisement is a video advertisement.

3. A method for displaying advertisements as recited in claim 2 wherein the video advertisement includes streaming video.

4. A method for displaying advertisements as recited in claim 3 wherein the streaming video is supplied wirelessly to the mobile display device from a wide area network.

5. A method for displaying advertisements as recited in claim 4 wherein the wide area network includes at least one of the Internet and a wireless telephone network.

6. A method for displaying advertisements as recited in claim 1 wherein detecting a flip-screen command includes detecting a gesture on the screen of the mobile display device.

7. A method for displaying advertisements as recited in claim 6 wherein the gesture is a finger tap.

8. A method for displaying advertisements as recited in claim 6 wherein the gesture is a finger swipe.

9. A method for displaying advertisements as recited in claim 1 wherein detecting a flip-screen command includes detecting a movement of the mobile display device.

10. A method for displaying advertisements as recited in claim 9 wherein the movement includes a shaking of the mobile display device.

11. A method for displaying advertisements as recited in claim 1 further comprising:
detecting a flip-screen command with the mobile display device during the displaying of the back slate advertisement;
animating a flip of the back slate advertisement on the screen; and
displaying the front slate advertisement on the screen.

12. A mobile display device comprising:
a processor;
a screen coupled to the processor; and
memory coupled to the processor including code segments executable on the processor for:
displaying a front slate advertisement on the screen of the display;
detecting a flip-screen command;
animating a flip of the front slate advertisement on the screen; and displaying a back slate advertisement on the screen.

13. A mobile display device as recited in claim 12 wherein the memory further includes code segments executable on the processor for:
detecting a flip-screen command during the displaying of the back slate advertisement;
animating a flip of the back slate advertisement on the screen; and
displaying the front slate advertisement on the screen.

14. A mobile display device as recited in claim 12 further comprising touchscreen sensors and wherein the flip-screen command includes at least one of a tap and a swipe on the screen.

15. A mobile display device as recited in claim 12 further comprising a motion sensor and wherein the flip-screen command includes a shaking of the mobile display device.

16. A mobile display device as recited in claim 15 further comprising a network interface coupled to the processor and wherein at least one of the front slate advertisement and the back slate advertisement includes a streaming video advertisement.

17. A mobile display device as recited in claim 16 wherein the streaming video advertisement is transmitted, at least in part, over at least one of the Internet and a wireless telephone network.

18. A mobile display device as recited in claim 17 wherein the mobile display device comprises one of a cellular telephone and a tablet computer.

19. Non-transitory computer readable media containing program instructions executable on a processor comprising:
code segments displaying a front slate advertisement on a screen of a display;
code segments detecting a flip-screen command;
code segments animating a flip of the front slate advertisement on the screen; and
code segments displaying a back slate advertisement on the screen.

20. Non-transitory computer readable media containing program instructions executable on a processor as recited in claim 19 further comprising:
code segments detecting a flip-screen command during the displaying of the back slate advertisement;
code segments animating a flip of the back slate advertisement on the screen; and
code segments displaying the front slate advertisement on the screen.
